# EUROPEAN PATENT SPECIFICATION

(11) **EP 0 714 699 B1**
(45) Date of publication and mention of the grant of the patent: **03.04.2002**
(21) Application number: 95202954.4
(22) Date of filing: 02.11.1995
(51) Int. Cl.: B01J 35/10, B01J 35/02, C10G 45/08

(54) **Catalyst and hydrotreating process**
Katalysator und Wasserstoffbehandlungsverfahren
Catalyseur et procédé d'hydrotraitement

(30) Priority: 03.11.1994 EP 94203209
(43) Date of publication of application: 05.06.1996
(73) Proprietor: SHELL INTERNATIONALE RESEARCH MAATSCHAPPIJ B.V., 2596 HR Den Haag (NL)
(72) Inventor: McNamara, David John c/o Criterion Catalyst Co, Whiteley Fareham PO 157AH (GB); Stork, Willem Hartman Jurriaan, NL-1031 CM Amsterdam (NL)

(56) References cited:
- EP-A- 0 399 592
- NL-A- 8 403 107
- US-A- 3 947 347
- US-A- 4 455 390
- US-A- 4 572 778
- DATABASE WPI Section Ch, Week 9334 Derwent Publications Ltd., London, GB; Class A81, AN 93-269198 XP002006860 & JP-A-05 184 941 (SUMITOMO METAL MINING CO) , 27 July 1993

## Description

The present invention relates to a catalyst and to a hydrotreating process for removing both solid contaminants and dissolved metallic contaminants from a hydrocarbon oil, wherein this catalyst is used.

Hydrotreating processes for removing solid as well as dissolved metallic contaminants are known in the art. For instance, in EP-A-0,399,592 a hydrotreating process is disclosed for the removal of solid and dissolved contaminants using as the catalyst porous inorganic oxide particles having a surface area of at most 1 m²/g and a pore volume of at least 0.1 ml/g in pores having a diameter of at least 10 microns. The inorganic oxide may additionally contain oxides or sulphides of metals of Group VA, VIA and/or VIII. From JP-A-05/184941 a hydrotreating process for removing solids and dissolved contaminants is known, wherein a catalyst is used having a surface area above 5 m²/g, a pore volume of 0.1 ml/g in micropores having a diameter of at least 0.004 micron (40 Å) and a void ratio of 30 to 70%. The catalyst may also additionally contain oxides or sulphides of metals of Group V, VI and/or VIII. In US-A-3,947,347 a hydrotreating process for removing metallic contaminants from a hydrocarbon feedstock is disclosed, in which process a catalyst is used which is free of any hydrogenating component and which has a surface area of from 1 to 20 m²/g and pores having an average diameter of from 0.1 to 1 micron (1,000 to 10,000 Å).

Higher surface area catalysts and support materials are disclosed inter alia in NL-A-8 403 107 and US-A-3 953 789. NL-A-8 403 107 discloses a high surface area (in excess of 100 m²/g) catalyst which has feeder macropores connecting to catalytically active micropores for metals and sulphur removal from asphalt- containing hydrocarbons. US-A-3 853 789 discloses high surface area (200-400 m²/g) alumina material with a substantial macroporosity.

The present invention aims to provide a catalyst and a hydrotreating process for the simultaneous removal of solid contaminants and dissolved metallic contaminants wherein this catalyst can suitably be used. In this hydrotreatment process solid as well as dissolved metallic contaminants should be adequately removed from any hydrocarbon oil fraction ranging from naphtha to residual oils, whereby long operation times with a minimised pressure drop across the catalyst bed are attained. The present invention, accordingly, aims to provide a catalyst having an increased uptake capacity for metallic contaminants, in particular an increased solids uptake capacity, thus allowing longer operation times and lower pressure drop when used in a process for hydrotreating hydrocarbon oils containing such contaminants.

It has been found that a catalyst comprising a porous inorganic refractory oxide and meeting specific requirements as regards its pore volume, microporosity, macroporosity and surface area can achieve these aims.

Accordingly, the present invention relates to a catalyst comprising a porous inorganic refractory oxide, wherein the catalyst has:
(a) a total pore volume in the range of from 0.2 to 0.5 ml/g,
(b) a macroporosity of at least 0.1 ml/g,
(c) a microporosity of at least 0.05 ml/g and preferably from 0.05 to 0.15 ml/g, and
(d) a surface area of from 5 to 20 m²/g.

The inorganic refractory oxide used can be any such oxide known in the art to be suitably applied in hydrotreating catalysts. Suitable oxides, then, include alumina, silica, alumina-boria, titania, silica-alumina, magnesia, silica-magnesia and mixtures of one or more of these refractory oxides. For the purpose of the present invention it is, however, preferred that the porous refractory oxide comprises at least 80% by weight of alumina, suitably alpha-alumina, based on total weight of catalyst. In an even more preferred embodiment of the present invention the refractory oxide comprises at least 80% by weight of alpha-alumina with the remainder up to 100% by weight being silica.

The catalyst according to the present invention should have both macroporosity and microporosity. With the term "macroporosity" as used throughout this specification is meant the pore volume in pores having a diameter of at least 0.1 micrometer (micron). With the term "microporosity" as used throughout this specification is meant the pore volume in pores having a diameter of 0.02 micron or less. Without wishing to be bound by any particular theory, it is believed that removal of dissolved metallic contaminants present in a hydrocarbon oil feed is initiated in the micropores where hydrogenation of the dissolved species is assumed to take place. The small metallic particles formed as a result of this hydrogenation are subsequently trapped in the macropores. The solid contaminants, on the other hand, are directly trapped in the macropores. By choosing the right balance between microporosity and macroporosity, optimum removal of both solid and dissolved metallic contaminants can be achieved. As has already been described above, the catalyst according to the present invention has a macroporosity of at least 0.1 ml/g combined with a microporosity of at least 0.05 ml/g, preferably from 0.05 to 0.15 ml/g, whereby the total pore volume is within the range of from 0.2 to 0.5 ml/g. Beside these conditions with respect to the porosity, the surface area of the catalyst is also an important factor. For the purpose of the present invention it has been found essential that the catalyst has a surface area of in the range of from 5 to 20 m²/g. In case the catalyst further comprises one or more catalytically active metals as a hydrogenation component, a surface area of at least 5 m²/g is necessary to ensure a good dispersion of the hydrogenation component.

When used in a hydrotreating process, the catalyst according to the present invention is suitably used in the form of a fixed bed of catalyst particles over which the oil feed is passed. A generally recognised problem in these kind of fixed bed hydrotreating operations is the pressure drop occurring after a certain time of operation. Such pressure drop is an indication of the fact that the catalyst bed, i.e. both the pores of the catalyst particles and the interstitial space between the different catalyst particles, becomes more and more plugged with contaminants. The porosity of the catalyst particles, accordingly, is a very important parameter in connection with pressure drop. By applying a catalyst having a porosity as described above, pressure drop across the catalyst bed can be reduced significantly.

Furthermore, the shape of the catalyst particles will also have some bearing on the pressure drop. This shape, namely, greatly influences the packing of the catalyst in the bed and hence the volume of the interstitial space of the catalyst bed. In principle, the catalyst particles may have any shape, known to be suitable in fixed bed hydrotreating operations. Examples of suitable catalyst particle shapes, then, include spheres, wheels, quadrulobes and trilobes. Suitable catalyst particle sizes are those normally used, i.e. diameters of 20 mm or less, suitably 2 to 15 mm and even more suitably 3 to 10 mm. For the purpose of the present invention the catalyst particles preferably are in the shape of a hollow cylinder. This shape, namely, allows the solid contaminants to be trapped in the inner space of the cylinder as well. Solid contaminants can, accordingly, be trapped in the macropores as well as in the inner space of the hollow cylinder. This enables a higher amount of solids to be trapped, which in return allows longer operation times without any pressure drop occurring. Preferably, the catalyst particles in the shape of a hollow cylinder have an external diameter in the range from 3 to 20 mm, preferably 4 to 12 mm, more preferably 5 to 10 mm, an internal diameter of from 1.5 to 10 mm, whereby the ratio external diameter to internal diameter has a value in the range from 2 to 14, and a length of from 3 to 25 mm, preferably 4 to 20 mm, more preferably 4 to 10 mm, in order to have an optimum solids uptake capacity.

The removal of dissolved metallic contaminants can be further improved by supporting one or more catalytically active metals as hydrogenation component onto the porous refractory oxide. It is, therefore, preferred that the catalyst according to the present invention in addition to the porous inorganic refractory oxide, further comprises at least one metal selected from the group consisting of Group VA metals, Group VIB metals and Group VIII metals (as defined in the Chemical Abstracts Service), as the hydrogenation component. The catalytically active metals may be present as oxide and/or as sulphide. Preferably, the catalyst comprises a combination of catalytically active metals. Preferred combinations to that end are nickel plus molybdenum and cobalt plus molybdenum as the catalytically active metals. Phosphorus may be present too as a promoter. Nickel or cobalt is suitably present in an amount of from 0.1 to 5.0% by weight, preferably from 0.5 to 2.0% by weight, molybdenum is suitably present in an amount of 0.5 to 10% by weight, preferably from 1.5 to 5.0% by weight, and, if present at all, phosphorus is suitably present in an amount of 0.05 to 1.5% by weight, preferably from 0.1 to 0.5% by weight, said weight percentages indicating the amount of metal based on total weight of catalyst.

Supporting of catalytically active metals onto the porous inorganic refractory oxide can be achieved by processes known in the art, for instance by impregnation techniques, whereby the refractory oxide particles are impregnated with one or more solutions of compounds of the catalytically active metals. The impregnated oxide particles are then dried and calcined to convert the metals into their oxidic form. If desired, the oxides can be converted into sulphides by presulphiding treatments known in the art. Other suitable methods for supporting the catalytically active metals onto the porous refractory oxide are based on ion exchange techniques.

The present invention also relates to a process for reducing the amount of solid contaminants and the amount of dissolved metallic contaminants present in a hydrocarbon oil containing such contaminants, wherein the hydrocarbon oil is contacted with hydrogen under hydrotreating conditions in the presence of the catalyst described above.

The hydrocarbon oil treated in accordance with the process of the present invention in principle can be any oil ranging from naphtha to residual oils, which contains dissolved metallic contaminants and/or solid metallic contaminants. Accordingly, the process of the present invention can be used to treat naphtha, kerosine, gasoil and residual oil. Particularly residual oils, including both atmospheric and vacuum residual oils, have been found to be advantageously treated by the process according to the present invention.

The process of the present invention is carried out under conventional hydrotreating conditions, for instance a total pressure of 1 to 300 bar, a hydrogen partial pressure of 1 to 250 bar, a temperature of 200 to 500 °C and a hydrogen to hydrocarbon oil ratio of 1 to 1800 Nl/l.

Contaminants which can be suitably removed by the process of the present invention include inter alia scales, solid and dissolved iron species, sodium species, calcium species, molybdenum species, nickel species and vanadium species. The process of the present invention is, however, very advantageously used for reducing the content of iron contaminants in a hydrocarbon oil and therefore may be conveniently applied in an iron-guard bed reactor.

## Claims

1. Catalyst comprising a porous inorganic refractory oxide, wherein the catalyst has:
(a) a total pore volume in the range of from 0.2 to 0.5 ml/g,
(b) a pore volume of at least 0.1 ml/g in pores having a diameter of at least 0.1 micron,
(c) a pore volume of at least 0.05 ml/g in pores having a diameter of 0.02 micron or less, and
(d) a surface area in the range of from 5 to 20 m²/g.

2. Catalyst according to claim 1, wherein the porous inorganic refractory oxide comprises at least 80% by weight of alumina.

3. Catalyst according to claim 1 or 2, wherein the pore volume (c) is in the range of from 0.05 to 0.15 ml/g.

4. Catalyst according to any one of the preceding claims, wherein the catalyst particles are in the shape of hollow cylinders.

5. Catalyst according to claim 4, wherein the hollow cylinders have an external diameter in the range from 3 to 20 mm, preferably 4 to 12 mm, an internal diameter of from 1.5 to 10 mm, whereby the ratio external diameter to internal diameter has a value in the range from 2 to 14, and a length of from 3 to 25 mm, preferably 4 to 20 mm.

6. Catalyst according to any one of the preceding claims, wherein the catalyst further comprises at least one metal selected from the group consisting of Group VA metals, Group VIB metals and Group VIII metals.

7. Catalyst according to claim 6, wherein the catalyst comprises nickel or cobalt, molybdenum and optionally phosphorus.

8. Catalyst according to claim 7, wherein nickel or cobalt is present in an amount of 0.5 to 2.0% by weight, molybdenum is present in an amount of 1.5 to 5.0% by weight and phosphorus, if present, is present in an amount of 0.1 to 0.5% by weight, said weight percentages indicating the amount of metal based on the total weight of catalyst.

9. Process for reducing the amount of solid contaminants and the amount of dissolved metallic contaminants, wherein a hydrocarbon oil containing such contaminants is contacted with hydrogen under hydrotreating conditions in the presence of a catalyst according to any one of claims 1 to 8.

## Patentansprüche

1. Katalysator mit einem Gehalt an einem porösen anorganischen feuerfesten Oxid, worin der Katalysator
(a) ein Gesamtporenvolumen im Bereich von 0,2 bis 0,5 ml/g,
(b) ein Porenvolumen von wenigstens 0,1 ml/g in Poren mit einem Durchmesser von wenigstens 0,1 µm,
(c) ein Porenvolumen von wenigstens 0,5 ml/g in Poren mit einem Durchmesser von 0,02 µm oder darunter, und
(d) eine Oberflächengröße im Bereich von 5 bis 20 m²/g aufweist.

2. Katalysator nach Anspruch 1, worin das poröse anorganische feuerfeste Oxid wenigstens 80 Gew.-% Aluminiumoxid umfaßt.

3. Katalysator nach Anspruch 1 oder 2, worin das Porenvolumen (c) im Bereich von 0,05 bis 0,15 ml/g liegt.

4. Katalysator nach einem der vorstehenden Ansprüche, worin die Katalysatorteilchen in Form von Hohlzylindern vorliegen.

5. Katalysator nach Anspruch 4, worin die Hohlzylinder einen Außendurchmesser im Bereich von 3 bis 20 mm, vorzugsweise 4 bis 12 mm, einen Innendurchmesser von 1,5 bis 10 mm, wobei das Verhältnis Außendurchmesser zu Innendurchmesser einen Wert im Bereich von 2 bis 14 aufweist, und eine Länge von 3 bis 25 mm, vorzugsweise 4 bis 20 mm haben.

6. Katalysator nach einem der vorstehenden Ansprüche, worin der Katalysator zusätzlich wenigstens ein Metall, ausgewählt aus der aus Gruppe VA-Metallen, Gruppe VIB-Metallen und Gruppe VIII-Metallen bestehenden Gruppe, umfaßt.

7. Katalysator nach Anspruch 6, worin der Katalysator Nickel oder Kobalt, Molybdän und gegebenenfalls Phosphor umfaßt.

8. Katalysator nach Anspruch 7, worin Nickel oder Kobalt in einer Menge von 0,5 bis 2,0 Gew.-% vorliegen, Molybdän in einer Menge von 1,5 bis 5,0 Gew.-% vorliegt und Phosphor, falls zugegen, in einer Menge von 0,1 bis 0,5 Gew.-% vorliegt, welche Gewichtsprozentsätze die Menge an Metall, bezogen auf das Gesamtgewicht des Katalysators, angeben.

9. Verfahren zur Verringerung der Menge an festen Verunreinigungen und der Menge an gelösten metallischen Verunreinigungen, wobei ein derartige Verunreinigungen enthaltendes Kohlenwasserstofföl unter Hydrierbedingungen in Gegenwart eines Katalysator nach einem der Ansprüche 1 bis 8 mit Wasserstoff in Berührung gebracht wird.

## Revendications

1. Catalyseur comprenant un oxyde réfractaire inorganique poreux, dans lequel le catalyseur a :
(a) un volume des pores total allant de 0,2 à 0,5 ml/g,
(b) un volume des pores d'au moins 0,1 ml/g sous la forme de pores ayant un diamètre d'au moins 0,1 micron,
(c) un volume des pores d'au moins 0,05 ml/g sous la forme de pores ayant un diamètre de 0,02 micron ou moins, et
(d) une aire superficielle allant de 5 à 20 m²/g.

2. Catalyseur suivant la revendication 1, dans lequel l'oxyde réfractaire inorganique poreux comprend au moins 80% en poids d'alumine.

3. Catalyseur suivant l'une ou l'autre des revendications 1 et 2, dans lequel le volume des pores (c) se situe dans la gamme de 0,05 à 0,15 ml/g.

4. Catalyseur suivant l'une quelconque des revendications précédentes, dans lequel les particules de catalyseur sont sous la forme de cylindres creux.

5. Catalyseur suivant la revendication 4, dans lequel les cylindres creux ont un diamètre externe allant de 3 à 20 mm, avantageusement de 4 à 12 mm, un diamètre interne de 1,5 à 10 mm, de sorte que le rapport diamètre externe à diamètre interne a une valeur allant de 2 à 14, et une longueur de 3 à 25 mm, avantageusement de 4 à 20 mm.

6. Catalyseur suivant l'une quelconque des revendications précédentes, dans lequel le catalyseur comprend de plus au moins un métal choisi dans le groupe comprenant les métaux du Groupe VA, les métaux du Groupe VIB et les métaux du Groupe VIII.

7. Catalyseur suivant la revendication 6, dans lequel le catalyseur comprend du nickel ou du cobalt, du molybdène et éventuellement du phosphore.

8. Catalyseur suivant la revendication 7, dans lequel le nickel ou cobalt est présent en une quantité de 0,5 à 2,0% en poids, le molybdène est présent en une quantité de 1,5 à 5,0% en poids et le phosphore, si présent, est présent en une quantité de 0,1 à 0,5% en poids, lesdits pourcentages en poids indiquant la quantité de métal par rapport au poids total de catalyseur.

9. Procédé de réduction de la quantité de contaminants solides et de la quantité de contaminants métalliques dissous, dans lequel une huile hydrocarbonée contenant ces contaminants est mise en contact avec de l'hydrogène sous des conditions d'hydrotraitement en présence d'un catalyseur suivant l'une quelconque des revendications 1 à 8.
